# EUROPEAN PATENT SPECIFICATION

(11) **EP 2 113 494 B1**
(45) Date of publication and mention of the grant of the patent: **14.07.2010**
(21) Application number: 08155579.9
(22) Date of filing: 02.05.2008
(51) Int. Cl.: C04B 14/04, C04B 28/02, C04B 18/04

(54) **Cement additive, cement composition, cement composition comprising waste material, and processes for making and using the same**
Zementzusatz, Zementzusammensetzung, Zementzusammensetzung mit Abfallstoff sowie Verfahren zu ihrer Herstellung und Verwendung
Additif de ciment, composition de ciment, composition de ciment comportant un déchet, et procédé de sa fabrication et son utilisation

(43) Date of publication of application: 04.11.2009
(73) Proprietor: Kaba Rosmalen Holding N.V., 5241 CB Rosmalen (NL)
(72) Inventor: Van Bakel, Petrus Kálmán, 5241 CB Rosmalen (NL); Tyagi, Youva Raj, 5216 CZ 's-Hertogenbosch (NL)
(74) Representative: Hatzmann, Martin

(56) References cited:
- EP-A- 0 739 977
- WO-A-96/34828
- US-A1- 2004 187 740
- ATKINS M ET AL: "Zeolite P in cements: its potential for immobilizing toxic and radioactive waste species" WASTE MANAGEMENT, ELSEVIER, NEW YORK, NY, US, vol. 15, no. 2, 1 January 1995 (1995-01-01), pages 127-135, XP004047149 ISSN: 0956-053X
- MIMURA HITOSHI ET AL: "Adsorption behavior of cesium and strontium on synthetic zeolite P" JOURNAL OF NUCLEAR SCIENCE AND TECHNOLOGY 1993 MAY, vol. 30, no. 5, May 1993 (1993-05), pages 436-443, XP002497242
- OSTE L A ET AL: "Metal immobilization in soils using synthetic zeolites" JOURNAL OF ENVIRONMENTAL QUALITY MAY/JUNE 2002 ASA/CSSA/SSSA US, vol. 31, no. 3, May 2002 (2002-05), pages 813-821, XP002497243

## Description

The present invention relates to a cement additive, to a cement composition and to a cement composition comprising waste material and optionally different types of waste materials. Particularly, the invention allows to provide a cement containing composition wherein waste materials, especially basic waste material which may be contaminated or polluted soil, industrial residues different types of slurries and sludge, (residual) construction waste materials etc., are stabilized and immobilized. Especially, the core of the invention is formed by an additive mixture to be added to cement, which additive mixture allows the cement to effectively encapsulate waste materials in such a way that the waste material becomes stabilized and the pollutants present therein become immobilized; in other words, the waste material is contained in the composition of the invention in such a way that it will not or hardly (that is, below acceptable and allowable limits) leach out or otherwise escape from the composition. That is, according to internationally accepted standards, the waste material is immobilised by the present invention.

The process of the invention should enhance the encapsulation to immobilize (potentially) hazardous components present in the waste materials. Particularly, it is desired to immobilize pollutants in such a way that the immobilized product meets the requirements and specifications according to established governmental norms and legislation to use it as a construction material. In addition, it would be desirable to obtain materials having favourable engineering properties like high compression strength, high binding strength, high bending strengths and/or good point bending properties. In addition, the present invention relates to a method of preparing such composition. Further, the present invention relates to a method of using such compositions as construction material, for example in the stabilization of soil, in the construction of roads and various other applications including cement reduction.

The industrial world is confronted with a continuously growing amount of residues and waste materials, while simultaneously in the construction and building sector there is a growing demand for primary raw materials, like sand, gravel and aggregates and so on. The main object of the present invention is to make use of the residues and waste materials as a raw material to be used in building materials for construction applications. That is, the aim of the invention is to immobilize permanently waste materials, or at least the pollutants present therein, in cement, and by doing so creating useful building materials, such as power blocks, kerbsides and -stones, base and foundation materials and road construction materials, which may even have added value. The invention aims to add value to waste material and to achieve sustainable environmental protection, in addition to providing a viable technology for waste utilization as compared to the currently existing and prevailing practices of waste management. In addition, if the amount of cement in the construction material can be lowered, this immediately results in a reducement of CO₂ production.

In the present description and the appending claims, "waste material" is a broad concept (unless otherwise indicated) including all kinds of residual and waste materials from, e.g., the heavy industries, harbours, rivers, project developments, asphalt and concrete rubbish, infrastructural works, inclusive railway infrastructural works and scrap and demolitions sites. In a preferred embodiment, the present invention intends to use blaster grit and sieve sand.

WO-A-02/48067 teaches cement products based on cement containing as an additive composition, compositions containing (a) 45-90 wt.% sodium chloride, potassium chloride, magnesium chloride, calcium chloride, strontium chloride, barium chloride and/or ammonium chloride; (b) 1-10 wt.% aluminium chloride; and (c) 1-10 wt.% silica and/or zeolite and/or apatite. A construction material containing 1.7-3 kg of such an additive and 100-250 kg of cement per m³ of the total composition is suitable to bind polluted soil and fly ash.

In US 2004/187740, cementitious compositions are described which comprise pozzolonic materials, alkaline earth metals, and catalysts to catalyze the reaction between the pozzolonic materials and the alkaline earth materials. The preferred pozzolonic material is fly ash. The catalyst may be an alkali-containing zeolite and/or an alkali-containing feldspathoid. The catalyst not only accelerates the said reaction, but also allows for higher concentrations of pozzolonic material to replace alkaline earth metals in the cementitious composition; allows for superior rates of strength gain; and provides a non-caustic alternative to pozzolan accelerators.

The present invention relates to a new material, wherein an additive mixture is used that allows immobilization of waste material and gives the end product favourable construction material properties.

In a first embodiment, the present invention relates to an additive mixture which is based on three different types of zeolites. These types of zeolites are based on sodium, aluminium and silicon oxide.

The first zeolite, herein-after referred to as Zeolite-(1), has a dry solids content of 88-92 wt.% (under ambient conditions and especially at 25°C, 1 atm, relative humidity 80%), and comprises - on a dry basis, i.e. anhydrous (without water of crystallization) - 20-30 wt.%, preferably 22-27, more preferably 23.5-25.5 wt.% Na₂O; 30-40 wt.%, preferably 32-37, more preferably 33.5-36.5 wt.% Al₂O₃ ; and 35-45 wt.%, preferably 37-44, more preferably 39-43 wt.% SiO₂, said Zeolite-(1) having a bulk density in the range of 400-600 g/l and a tapped density (determined after 1250 taps; the method to determine tapped density, for instance, being described by Dubrow and Rieradka in Technical Reports Nos. PA-TR-2092; AD-47231 of Picatinny Arsenal, Samuel Feltman Ammunition Labs. Dover N.J. (Nov. 1, 1954; OSTI ID: 4388372)) of at least 400 g/l; having a calcium-binding capacity of at least 130 mg, preferably at least 150 mg CaO/g on a 100% basis (anhydrous zeolite) (determined as described in EP-A-0 384 070); having a pH above 9, and preferably of about 10; having an ignition loss (1 hour; 800 °C) of 15-30 %; and containing ≤50 ppm water soluble Fe; ≤ 500 ppm total Fe; ≤ 1 ppm water soluble Ni; ≤ 2 ppm water-soluble Cr; and ≤ 7 ppm water-soluble Ti. In a preferred embodiment, Zeolite-(1) has an average particle size (determined by sedimentation analysis using a SediGraph 5100 marketed by Micromeritics) of 1.2-2.2 µm. The pH is determined in a 5% aqueous suspension at room temperature (25°C) using a conventional pH meter, which pH determination is used for all pH-values referred to in the present description and claims. In a preferred embodiment, Zeolite-(1) is a P-type zeolite.

The second zeolite, herein-after Zeolite-(2), is a small particle size zeolite and has a dry-solids content of 78-82 wt.%, and comprises - on a dry basis , i.e. anhydrous (without water of crystallization) - 20-30 wt.%, preferably 22-27, more preferably 23.5-25.5 wt.% Na₂O; 30-40 wt.%, preferably 32-37, more preferably 33.5-36.5 wt.% Al₂O₃ ; and 35-45 wt.%, preferably 37-44, more preferably 39-43 wt.% SiO₂; has a pH in the range of 10-12 and preferably in the range of 11-12; has an average particle size (determined by sedimentation analysis using a SediGraph 5100 marketed by Micromeritics) of 0.7-2.4, and preferably from 0.9-1.5 µm; has a bulk density of 400-600 g/l; and contains less than 50 ppm iron and less than 5 ppm Ti. In a preferred embodiment, Zeolite-(2) is also a, be it a different, P-type zeolite.

The third zeolite, herein-after Zeolite-(3) has a dry-solids content of 68-82 wt.% and comprises - on a dry basis , i.e. anhydrous (without water of crystallization) - 19-27 wt.%, preferably 20-26, more preferably 21-24 wt.% Na₂O; 33-42 wt.%, preferably 34-40, more preferably 35-38 wt.% Al₂O₃ and 38-44 wt.%, preferably 39-42, more preferably 40-42 wt.% SiO₂, said zeolite having a tapped density of 300-600 g/l; having a pH above 10, and having an ignition loss of 16-24%.

In a preferred embodiment, Zeolite-(3) has an average particle size (D₅₀) of 1-5 µm; wherein less than 0.1 wt% of the particles have a size of less than 0.1 µm. In a preferred embodiment, Zeolite-(3) is an A-type zeolite.

The three different zeolites are combined in a volume ratio of Zeolite-(1):Zeolite-(2):Zeolite-(3) of 1 : 0.8-1.2 : 0.8-1.2, and preferably about 1 : 1:1.

The described zeolite types are commercially available, e.g., from W.R. Grace or Davisson.

In a second aspect, the invention relates to a cement comprising the additive mixture according to the invention. Very good results are obtained when the cement comprises 1.2-3.0 wt.%, preferably 1.6-2.5 wt.% and more preferably 2-2.3 wt.% zeolites, drawn to the total weight of zeolites and cement.

In a third aspect, the invention relates to a construction composition, comprising cement, waste material, and 0.5-5 wt.% preferably 1-3 wt.% of the additive mixture of the invention. In the composition of the invention, the additive is present in amounts between 1-10, preferably between 1.5-7, and more preferably between 2-6 kg/m³ final product and the cement is used in an amount of 80-500, preferably 90-300 and most preferably 100-200 kg/m³ final product; the remainder being waste material (and conventional fillers like sand and pebbles and so on). The upper limit is not particularly critical; it is essentially determined by techno-economical reasons. As to the lower limit, it is essential that the waste material incorporated is suitably stabilized such that the pollutants and contaminants present therein are effectively immobilized in the composition matrix. Dependent on the type of waste material present, the skilled person can easily find an optimized amount of additive to be added.

The additive mixture can simply be prepared by mixing the individual ingredients, preferably to a homogeneous mixture.

The cement to be used in the construction material of the present invention can be selected from all known cements. Preferably, the invention uses Portland cement and/or blast-furnace or high-oven cement; suitable cements are identified by the following identifications CEM I 32,5 R, CEM I 42,5 R, CEM I 52,5 R, CEM II/B-V 32,5 R, CEM III/A 32,5 N, CEM III/A 42,5 N, CEM III/A 52,5 N, CEM III/B 32,5 N and CEM III/B 42,5 N.

The balance of the construction material may be formed by high amounts of sand, or alternatively and in addition, clay, loam, mud, peat, (sewer) sludge, refuse incineration slags, soil and fly ashes, and coarse materials such as gravel, pieces of asphalt, pieces of stone rubbish, as well as other additives.

In a preferred embodiment, the cement and the additive according to the invention are combined with blaster grit (Eural code 12.01.17), railway gravel and lumber (Eural code 17.05.08) and/or sieve sand (Eural code 19.12.12 and 19.12.09), wherein blaster grit, railway gravel and lumber and sieve sand can be present in amounts of 5-90 vol.% drawn to the final composition, preferably between 10 and 80 vol.%. In a preferred embodiment, sieve sand is present in an amount between 10-70 vol.%, more preferably between 20 and 60 vol.% and most preferably between 30 and 50 vol.%. The blaster grit is preferably present in amount between 5 and 50 vol.%, more preferably between 10 and 35 vol.%. The railway gravel and lumber most preferably is present in amounts between 40 and 60 vol.%.

In addition to the solid materials, a suitable amount of water is added to the ingredients in order to make a mortar-like material, that, after hardening, results in a final product to be used as construction material according to the invention. Suitable amounts of water can easily be determined by a person skilled in the art; generally suitable amounts vary between 4 and 22 vol.%, preferably between 5 and 20 vol.%. Preferably, the mortar-like mixture prepared is compacted, pressed, vibrated, rolled or otherwise processed into a desired form.

Sieve sand originates from activities as sorting and/or breaking of demolition waste. In a breaking process the first step is a sieve step, to remove the fines. Next, the coarse material is broken and upgraded to a secondary raw material, which can be used as a coarse aggregate in concrete, or as a road construction material. The fine material (sieve sand) cannot be applied without due consideration. The sieve sand may be contaminated with all kinds of contaminations, including organic contaminations such as polycyclic aromatic hydrocarbons (PAHs) to such an extent that, according to the Dutch Building Materials Decree, the sieve sand is not applicable as a granular building material. In the Building Materials Decree the organic contaminants are assessed on the basis of total concentration, in mg/kg (dry solids). However, from an environmental point of view, not so much is the total concentration, but mainly the amount of leaching is relevant. For this reason, the impact on the environment of the application of stabilised sieve sand has been assessed in terms of mg leached per square meter surface area. The composition of the present invention results in the fact that, based on leaching tests, even highly contaminated sieve sand (e.g. containing up to 1,000 mg/kg PAHs) can be sufficiently stabilised or immobilized, to pass relevant tests and gouvernmental requirements.

Another advantage of the composition of the invention is that it has highly advantageous properties. Materials are created with a high hardness and/or high compression strength, for instance with compressions strengths in the range of 1.5-50, and preferably 5-45 MPa. In addition, materials are created having a high elasticity modulus of for instance 500-30,000, and preferably 10,000-20,000 N/mm² and high flexural and tensile strengths in the order of about 1-9, and preferably 2-5 N/mm².

Especially because of the properties associated with the compression strength and the tensile strength, the composition according to the invention has important advantages over conventional cement bound material that breaks down without reinforcement materials when subjected to high situations involving high compression and/or tensile strengths.

Dependent on the composition of the waste material to be immobilized, the additive according to the invention may contain other constituents. Examples of such other constituents are sodium carbonate, generally in amounts between 0.1-5 wt.% drawn on the final composition; organic bases like CaO; and sodium salts of fumed silica.

Sodium carbonate is a sodium salt of carbonic acid and generally is a crystalline hepta-hydrate with alkaline character. It has alkaline character and induces a stabilisation of pH of the mixture; its main role is to influence the redox potential and pH during the formation of concrete. In addition, it also acts as a wetting agent and thus influences the water percentage in the mixture for getting a good quality concrete.

Cement production requires a source of calcium and a source of silicon. CaO present in the concrete provides for additional ionic requirements needed for achieving strength and other desirable properties of the concrete.

Silica fume is a by-product of producing silicon metal or ferrosilicon based on alloys. One of the most beneficial uses for silica fume in concrete is based on its chemical and physical properties; it is a very reactive pozzolan. Silica fume consists primarily of amorphous (non-crystalline) silicon dioxide (SiO₂). The individual particles are extremely small, approximately 1/100th the size of an average cement particle. Because of its fine particles, large surface area, and the high SiO₂ content, silica fume is a very reactive pozzolan when used in concrete. Concrete containing silica fume induces a high strength and has an effect on concrete durability and avoids erosion. Silica fume is added according to the overall chemical requirements of the mixture. Adding, finishing, and curing silica-fume concrete is carried out as required from point of view of hardening process.

High-strength concrete is a very economical material for carrying vertical loads in high-rise structures.

In a preferred embodiment, the construction material of the present invention is coated with a material rendering the construction material fluid impermeable.

In yet a further aspect, the present invention relates to a process for immobilizing waste material and especially the pollutants present therein, optionally to prepare a construction material according to the invention, comprising combining said waste material in a suitable amount of water with cement and the additive mixture to the invention, or with the cement according to the invention; followed by curing

The invention will now be described in further detail while referring to the following, non-limiting examples. Percentages are percentages by weight drawn to the total composition, unless otherwise indicated.

### Examples

### Example 1

In a suitable reservoir, cement (CEM III (ex ENCI, the Netherlands)) containing three different zeolites (Zeolite-(1) is a synthetic P-type zeolite having a dry solids content of 90% and containing - on a dry basis - 24.0 wt.% Na₂O, 34.0 wt.% Al₂O₃ and 42.0 wt.% SiO₂, having a bulk density of 550 g/l, a pH of 10, a calcium binding capacity of 165 mg CaO/g and an ignition loss of 21; Zeolite-(2) is a synthetic P-type zeolite having a dry solids content of 80 wt.% and containing - on a dry basis - 25.0 wt.% Na₂O, 36.5 wt.% Al₂O₃ and 42.5 wt.% SiO₂, having a bulk density of 400 g/l, a pH of 11.5, a calcium binding capacity of 165 mg CaO/g and an average particle size of 1.4 µm; and Zeolite-(3) is a synthetic A-type zeolite having a dry solids content of 70% and containing - on a dry basis - 23.5 wt.% Na₂O, 35.4 wt.% Al₂O₃ and 41.1 wt.% SiO₂, having a tapped density of 310 g/l, a pH of 12, a calcium binding capacity of 165 mg CaO/g and an ignition loss of 17) in a volume ratio of 1:1:1 (Zeolite-(1):Zeolite-(2):Zeolite-(3)), or (for comparison) a cement (the same CEM III) not containing said zeolites, was combined with blaster grit (Eural code 12.01.17), railway gravel and lumber (Eural code 17.05.08), sieve sand (Eural code 19.12.12), and refuse incineration slags in the amounts as indicated in the following table 1. A suitable amount of water was added, and the material was added to cylindrical moulds having an internal diameter of 10 cm and a height of 12 cm. After curing, the moulds were removed and the compressive strength (in N/mm²; average of three measurements) was determined after drying after 7, 14, 28, 56 and 90 days. The results are shown in Table 2.

The compositions of the invention did not show any leaching out of materials incorporated in the cement encompassing the zeolites after 30 days in water; the comparative example did give some leaching out.

**Table 1**

| Composition (dry weight in kg) | I | II (comp. Ex.) |
|---|---|---|
| CEM III | 150 | 150 |
| Zeolites | 2.25 | --- |
| Blaster grit | 456 | 456 |
| Sieve sand | 232 | 232 |
| Railway gravel | 877 | 877 |
| Refuse incineration slags | 538 | 538 |

**Table 2, Compressive strength data**

| Composition | days | compressive strength (N/mm²) |
|---|---|---|
| I | 7 | 15.6 |
| II | 7 | 6.5 |
| I | 14 | 17.4 |
| II | 14 | 9.0 |
| I | 28 | 19.0 |
| II | 28 | 10.4 |
| I | 56 | 20.6 |
| II | 56 | 11.7 |
| I | 90 | 21.3 |
| II | 90 | 12.2 |

### Example 2

Using the same three zeolites as used in Example 1 in a 1:1:1 weight ratio, test samples according to the invention were made and compared to test samples not using the zeolite mixture.

Particularly, the following compositions were made:

**Table 3**

| Sample | Cement | Sand | Pebbles | Water | Cement additive |
|---|---|---|---|---|---|
| P1 | 480 g | 719 g | 985 g | 225 ml | 0g |
| P2 | 480 g | 719 g | 985 g | 225 ml | 1.5 g |
| P3 | 288 g | 911 g | 985 g | 225 ml | 1.5 g |
| P4 | 320 g | 1000 g | 935 g | 205 ml | 0g |
| P5 | 320 g | 1000 g | 935 g | 205 ml | 1g |
| P6 | 192 g | 1128 g | 935 g | 225 ml | 1g |

P1 and P4 are comparative examples.

After letting the test samples cure for 2, 7 and 28 days, the compressive strength was determined and the data are shown in table 4.

**Table 4 Compressive Strengths in PST (lb/m²)**

| Sample | after 2 days | after 7 days | after 28 days |
|---|---|---|---|
| P1 | 2987 | 3456 | 5019 |
| P2 | 7482 | 8352 | 10512 |
| P3 | 3132 | 3616 | 5224 |
| P4 | 1390 | 1801 | 2630 |
| P5 | 3828 | 4516 | 6380 |
| P6 | 1540 | 1740 | 2546 |

From these data, the following conclusions can be drawn. When using the cement additive of the present invention, the compressive strength of an otherwise similar cement composition is considerably increased (compare P1 and P2 and compare P4 and P5). Moreover by using the cement additive of the present invention, the amount of cement in a cement composition can be reduced considerably (to about 40-50%) while maintaining the same compressive strengths (compare P1 and P3 and compare P4 and P6).

## Claims

1. Additive mixture comprising three zeolites, Zeolite-(1), Zeolite-(2) and Zeolite-(3), wherein
Zeolite-(1) has a dry solids content of 88-92 wt.%, and comprises - on a dry basis, *i.e.* anhydrous (without water of crystallization) - 20-30 wt.%, preferably 22-27, more preferably 23.5-25.5 wt.% Na₂O; 30-40 wt.%, preferably 32-37, more preferably 33.5-36.5 wt.% Al₂O₃; and 35-45 wt.%, preferably 37-44, more preferably 39-43 wt.% SiO₂, said Zeolite-(1) having a bulk density in the range of 400-600 g/l; having a calcium-binding capacity of at least 130 mg CaO/g on a 100% basis (anhydrous zeolite); having a pH above 9, and preferably of about 10; having an ignition loss (1 hour; 800 °C) of 15-30 %; and containing ≤50 ppm water soluble Fe; ≤ 500 ppm total Fe;≤ 1 ppm water soluble Ni;≤ 2 ppm water-soluble Cr; and ≤ 7 ppm water-soluble Ti;
Zeolite-(2) has a dry-solids content of 78-82 wt.%, and comprises - on a dry basis , i.e. anhydrous (without water of crystallization) - 20-30 wt.%, preferably 22-27, more preferably 23.5-25.5 wt.% Na₂O; 30-40 wt.%, preferably 32-37, more preferably 33.5-36.5 wt.% Al₂O₃ and 35-45 wt.%, preferably 37-44, more preferably 39-43 wt.% SiO₂; said Zeolite-(2) having a pH in the range of 10-12 and preferably in the range of 11-12; having an average particle size of 0.7-2.4, and preferably from 0.9-1.5 µm; having a bulk density of 400-600 g/l; and containing less than 50 ppm iron and less than 5 ppm Ti; and
Zeolite-(3) has a dry-solids content of 68-82 wt.% and comprises - on a dry basis , i.e. anhydrous (without water of crystallization) - 19-27 wt.%, preferably 20-26, more preferably 21-24 wt.% Na₂O; 33-42 wt.%, preferably 34-40, more preferably 35-38 wt.% Al₂O₃ and 38-44 wt.%, preferably 39-42, more preferably 40-42 wt.% SiO₂, said zeolite having a tapped density of 300-600 g/l; having a pH above 10, and having an ignition loss of 16-24%.

2. Additive mixture according to claim 1, wherein Zeolite-(1) is a P-type zeolite.

3. Additive mixture according to claim 1 or 2, wherein Zeolite-(2) is a P-type zeolite.

4. Additive mixture according to any one of the preceding claims, wherein Zeolite-(3) is an A-type zeolite.

5. Additive mixture according to any one of the preceding claims, wherein the Zeolite-(1), Zeolite-(2) and Zeolite-(3) are combined in a volume ratio of respectively 1 : 0.8-1.2 : 0.8-1.2, and preferably about 1 : 1 : 1.

6. Cement comprising the additive mixture according to any one of the preceding claims.

7. Cement according to claim 6, comprising 1.2-3.0 wt.%, preferably 1.6-2.5 wt.% and more preferably 2-2.3 wt.% zeolites drawn to the total weight of zeolites and cement.

8. Construction composition, comprising cement, waste material, and 0.05-0.5 wt.%, preferably 0.1-0.3 wt.% of the additive mixture of any one of claims 1-5.

9. Construction composition according to claim 8, wherein the cement and the additive are combined with 5-90 vol.% drawn to the final composition, preferably between 10 and 80 vol.%, of waste material.

10. Construction composition according to claim 8 or 9, coated with a material rendering the construction material fluid impermeable.

11. Process for immobilizing waste material optionally to prepare a construction material according to any one of claims 8-10, comprising combining said waste material in a suitable amount of water with cement and the additive mixture of any one of claims 1-5, or with the cement according to any one of claims 6 or 7; followed by curing.

## Patentansprüche

1. Additivmischung, umfassend drei Zeolithe, Zeollth-(1), Zeolith-(2) und Zeolith-(3), worin
Zeolith-(1) einen Trockenfeststoffgehaltl von 88 bis 92 Gew.-% aufweist und auf trockener Basis, d.h. wasserfrei (ohne Wasser der Kristallisation), umfasst 20 bis 30 Gew.-%, vorzugsweise 22 bis 27 Gew.-%, weiter bevorzugt 23,5 bis 25,5 Gew.-% Na₂O; 30 bis 40 Gew.-%, vorzugsweise 32 bis 37 Gew.-%, weiter bevorzugt 33,5 bis 36,5 Gew.-% Al₂O₃; und 35 bis 45 Gew.-%, vorzugsweise 37 bis 44 Gew.-%, weiter bevorzugt 39 bis 43 Gew.-% SiO₂; wobei Zeolith-(1) eine Schüttdichte in dem Bereich von 400 bis 600 g/l aufweist; eine Kalzium-Bindungskapazität von mindestens 130 mg CaO/g auf 100 %-Basis (wasserfreies Zeolith) aufweist; einen pH-Wert oberhalb von 9 und vorzugsweise von ungefähr 10 aufweist; einen Glühverlust (1 Stunde; 800 °C) von 15 bis 30 % aufweist; und ≤ 50 ppm wasserlösliches Eisen; ≤ 500 ppm Gesamtgehalt Eisen; ≤ 1 ppm wasserlösliches Nickel; ≤ 2 ppm wasserlösliches Chrom; und ≤ 7 ppm wasserlösliches Titan enthält;
Zeolith-(2) einen Trockenfeststoffgehalt von 78 bis 82 Gew.-% aufweist und auf trockener Basis, d.h. wasserfrei (ohne Wasser der Kristallisation), umfasst 20 bis 30 Gew.-%, vorzugsweise 22 bis 27 Gew.-%, weiter bevorzugt 23,5 bis 25,5 Gew.-% Na₂O; 30 bis 40 Gew.-%, vorzugsweise 32 bis 37 Gew.-%, weiter bevorzugt 33,5 bis 36,5 Gew.-% Al₂O₃; und 35 bis 45 Gew.-%, vorzugsweise 37 bis 44 Ges.-%, weiter bevorzugt 39 bis 43 Ges.-% SiO₂; wobei Zeolith-(2) einen pH-Wert in dem Bereich von 10 bis 12 und vorzugsweise in dem Bereich von 11 bis 12 aufweist; eine mittlere Teilchengröße von 0,7 bis 2,4 und weiter bevorzugt von 0,9 bis 1 ,5 µm aufweist; eine Schüttdichte von 400 bis 600 g/l aufweist; und weniger als 50 ppm Eisen und weniger als 5 ppm Titan enthält; und Zeolith-(3) einen Troekenfeststoffgehait von 68 bis 82 Gew.-% aufweist und auf trockener Basis, d.h. wasserfrei (ohne Wasser der Kristallisation), umfasst 19 bis 27 Gew.-%, vorzugsweise 20 bis 26 Gew.-%, weiter bevorzugt 21 bis 24 Gew.-% Na₂O, 33 bis 42 Gew.-%, vorzugsweise 34 bis 40 Gew.-%, weiter bevorzugt 35 bis 38 Gew.-% Al₂O₃ und 38 bis 44 Gew,-%, vorzugsweise 39 bis 42 Gew.-%, weiter bevorzugt 40 bis 42 Gew.₋% SiO₂, wobei der Zeolith eine Rütteldichte von 300 bis 600 g/l aufweist; einen pH-Wert oberhalb von 10 aufweist und einen Glühverlust von 16 bis 24 % aufweist.

2. Additivmischung nach Anspruch 1 , worin Zeolith-(1) ein Zeolith vom P-Typ ist.

3. Additivmischung nach Anspruch 1 oder 2, worin Zeolith-(2) ein Zeolith vom P-Typ ist,

4. Additivmischung nach einem der vorherigen Ansprüche, worin der Zeolith-(3) ein Zeolith vom A-Typ ist.

5. Additivmischung gemäß einem der vorherigen Ansprüche, worin der Zeolith-(1), der Zeolith-(2) und der Zeolith-(3) in einem Volumenverhältnis von jeweils 1 : 0,8 - 1,2 : 0,8 - 1,2 und vorzugsweise ungefähr 1:1:1 kombiniert werden.

6. Zement, umfassend die Additivmischung gemäß einem der vorherigen Ansprüche.

7. Zement gemäß Anspruch 6, umfassend 1,2 bis 3 Gew.-%, vorzugsweise 1,6 bis 2,5 Gew.-% und weiter bevorzugt 2 bis 2,3 Gew.-% Zeollthe, bezogen auf das Gesamtgewicht von Zeolithen und Zement.

8. Konstruktionszusammensetzung, umfassend Zement, Reststoffe und 0,05 bis 0,5 Gew.-%, vorzugsweise 0,1 bis 0,3 Gew.-%, der Additivmischung gemäß einem der Ansprüche 1 bis 5.

9. Konstruktionszusammensetzung gemäß Anspruch 8, worin der Zement und das Additiv vermischt werden mit 5 bis 90 Vol.-%, vorzugsweise zwischen 10 und 80 Vol.-%, jeweils bezogen auf die Endzusammensetzung, an Reststoffen.

10. Konstruktionszusammensetzung nach Anspruch 8 oder 9, beschichtet mit einem Material, welches die Konstruktion für ein Fluidmaterial undurchlässig macht.

11. Verfahren zur Immobilisierung von Restmaterial, gegebenenfalls zur Herstellung eines Konstruktionsmaterials gemäß einem der Ansprüche 8 bis 10, umfassend das Vermischen des Restmaterials in einer geeigneten Menge an Wasser mit Zement und der Additivmischung gemäß einem der Ansprüche 1 bis 5 oder mit dem Zement gemäß einem der Ansprüche 6 oder 7 und das anschließende Aushärten.

## Revendications

1. Mélange adjuvant comprenant trois zéolites, Zéolite (1), Zéolite (2) et Zéolite (3), dans lequel
la Zéolite (1) présente une teneur pondérale en matières solides sèches comprise entre 88 et 92 % et comprend, pour une base sèche, c'est₋à-dire anhydre (sans eau de cristallisation) de 20 à 30 % en poids, de préférence entre 22 et 27, ou mieux entre 23,5 et 25,5 % en poids de Na₂O, entre 30 et 40 % en poids, de préférence entre 32 et 37, ou mieux entre 33,5 et 36,5 % en poids d'Al₂O₃ ; et de 35 à 45 % en poids, de préférence entre 37 et 44, ou mieux entre 39 et 43 % en poids de SiO₂, ladite Zéolite (1) présentant une masse volumique apparente comprise entre 400 et 600 g/L ; dont la capacité de fixation de calcium est supérieure ou égale à 130 mg CaO/g pour une base de 100 % (zéolite anhydre) ; dont le pH est supérieur à 9, et de préférence voisin de 10 ; présentant une perte par calcination (1 h ; 800 °C) comprise entre 15 et 90 % ; et contenant au plus 50 ppm de fer hydrosoluble, au plus 500 ppm de fer total, au plus 1 ppm de nickel hydrosoluble, au plus 2 ppm de chrome hydrosoluble, et au plus 7 ppm de titane hydrosoluble ;
la Zéolite (2) présente une teneur pondérale en matières solides sèches comprise entre 78 et 82 % et comprend, pour une base sèche, c'est-à-dire anhydre (sans eau de cristallisation) de 20 à 30 % en poids, de préférence entre 22 et 27, ou mieux entre 23,5 et 25,5 % en poids de Na₂O, entre 30 et 40 % en poids, de préférence entre 32 et 37, ou mieux entre 33,5 et 36,5 % en poids d'Al₂O₃ ; et de 35 à 45 % en poids, de préférence entre 37 et 44, ou mieux entre 39 et 43 % en poids de SiO₂, ladite Zéolite (2) présentant un pH compris entre 10 et 12, et de préférence compris entre 11 et 12 ; présentant une taille moyenne de particules comprise entre 0,7 et 2,4, de préférence entre 0,9 et 1,5 µm ; présentant une masse volumique apparente comprise entre 400 et 600 g/L ; et contenant moins de 50 ppm de fer et moins de 5 ppm de titane ;
et la Zéolite (3) présente une teneur pondérale en matières solides sèches comprise entre 68 et 82 % et comprend, pour une base sèche, c'est-à-dire anhydre (sans eau de cristallisation) de 19 à 27 % en poids, de préférence entre 20 et 26, ou mieux entre 21 et 24 % en poids de Na₂O, entre 33 et 42 % en poids, de préférence entre 34 et 40, ou mieux entre 35 et 38 % en poids d'Al₂O₃ ; et de 38 à 44 % en poids, de préférence entre 39 et 42, ou mieux entre 40 et 42 % en poids de SiO₂, ladite Zéolite (3) présentant une masse volumique à l'état tassé comprise entre 300 et 600 g/L ; présentant un pH supérieur à 10 ; et présentant une perte par calcination comprise entre 16 et 24 %.

2. Mélange adjuvant selon la revendication 1, dans lequel la Zéolite (1) est une zéolite de type P.

3. Mélange adjuvant selon la revendication 1 ou 2, dans lequel la Zéolite (2) est une zéolite de type P.

4. Mélange adjuvant selon l'une quelconque des revendications précédentes, dans lequel la Zéolite (3) est une zéolite de type A.

5. Mélange adjuvant selon l'une quelconque des revendications précédentes, dans lequel la Zéolite (1), la Zéolite (2) et la Zéolite (3) sont associées en des proportions volumiques valant respectivement 1/0,8-1,2/0,8-1,2 et de préférence environ 1/1/1.

6. Ciment comprenant un mélange adjuvant selon l'une quelconque des revendications précédentes.

7. Ciment selon la revendication 6, comprenant 1,2 à 8,0 % en poids, de préférence 1,6 à 2,5 % en poids ou mieux 2 à 2,3 % en poids de zéolites par rapport au poids total de zéolites et de ciment.

8. Composition destinée à la construction, comprenant du ciment, un matériau de rebut et de 0,05 à 0,5 % en poids, de préférence entre 0,1 et 0,3 % en poids d'un mélange adjuvant de l'une quelconque des revendications 1 à 5.

9. Composition destinée à la construction selon la revendication 8, dans laquelle le ciment et l'adjuvant sont associés avec 5 à 90 % en volume par rapport à la composition finale, de préférence avec 10 à 80 % en volume de matériau de rebut.

10. Composition destinée à la construction selon la revendication 8 ou 9, revêtu d'un matériau rendant le matériau de construction imperméable vis-à-vis des fluides.

11. Processus d'immobilisation de matériau de rebut permettant de préparer en option un matériau de construction conforme à l'une quelconque des revendications 8 à 10, comprenant le fait de combiner dudit matériau de rebut, dans une quantité appropriée d'eau, avec du ciment et un mélange adjuvant selon l'une quelconque des revendications 1 à 5, ou avec un ciment conforme à l'une quelconque des revendications 6 et 7, et le fait de laisser ensuite le tout durcir.
